(19) Europäisches Patentamt / European Patent Office / Office européen des brevets

(11) **EP 4 023 706 A1**

(12) **EUROPEAN PATENT APPLICATION**
published in accordance with Art. 153(4) EPC

(43) Date of publication:
06.07.2022 Bulletin 2022/27

(21) Application number: 20856342.9

(22) Date of filing: 26.08.2020

(51) International Patent Classification (IPC):
C08K 5/098 (2006.01)          C08K 5/14 (2006.01)
C08L 9/00 (2006.01)           C08L 21/00 (2006.01)
C08L 101/00 (2006.01)         F03G 7/06 (2006.01)
C08K 3/01 (2018.01)           C08K 3/06 (2006.01)

(52) Cooperative Patent Classification (CPC):
C08K 3/01; C08K 3/06; C08K 5/098; C08K 5/14;
C08L 9/00; C08L 21/00; C08L 101/00; F03G 7/06

(86) International application number:
PCT/JP2020/032123

(87) International publication number:
WO 2021/039821 (04.03.2021 Gazette 2021/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.08.2019 JP 2019157210

(71) Applicant: ENEOS Corporation
Chiyoda-ku
Tokyo 100-8162 (JP)

(72) Inventor: CHINO, Keisuke
Tokyo 100-8162 (JP)

(74) Representative: Müller-Boré & Partner
Patentanwälte PartG mbB
Friedenheimer Brücke 21
80639 München (DE)

(54) **ELASTOMER COMPOSITION FOR ACTUATOR, ACTUATOR MEMBER, AND ACTUATOR ELEMENT**

(57) [Problem to be solved]
To provide an elastomer composition for an actuator that can be operated by changing only the amount of heat energy.
[Means to Solve the Problem]
The elastomer composition used for an actuator that can be operated by changing only the amount of heat energy has an entropy elastic modulus of 3.0 kPa/K or more, and comprises at least one polymer having a glass transition temperature of 25 °C or less and a crystal nucleating agent.

**Description**

BACKGROUND OF THE INVENTION

Field of the Invention

The present invention relates to an elastomer composition for an actuator, and more particularly to an elastomer composition for use in an actuator that can be operated only by changing the amount of heat energy. The present invention also relates to an actuator member using the elastomer composition for an actuator, and an actuator element provided with the actuator member.

Background Art

A conventionally known actuator is one operated by external stimulation. For example, a method has been proposed in which a polymer film or fiber is stretched or bent by absorption and desorption of water molecules by electrical stimulation (see Patent Documents 1 and 2). In such a method, the contraction rate of the polymer film itself was less than 5 %. In order to increase the contraction rate, the relative humidity had to be adjusted within the range of 80 % to 100 %. Therefore, there has been a problem that the operation of the actuator is not stabilized depending on the environmental (atmospheric) conditions in which the polymer film is provided.

Therefore, there is a need to obtain a high contraction rate and to exhibit good actuator performance (work density) according to the conditions of external stimulation without being influenced by environmental conditions such as humidity.

[Prior Art Documents]

[Patent Documents]

Patent Document 1: WO2006/025399
Patent Document 2: WO2008/055041

Summary of the Invention

[Problem to be Solved by the Invention]

Until now, there has been no known actuator that can be operated only by changing the amount of heat energy using entropy elasticity instead of electrical stimulation an external stimulation. As a result of intensive research, the present inventor has found that that an actuator that can be operated only by changing the amount of heat energy can be obtained by using an elastomer composition having an entropy elastic modulus of equal to or greater than a specific value and containing at least one polymer having a glass transition temperature of 25 °C or less, and a crystal nucleating agent, thereby completing the present invention. As a result of intensive research, the present inventor has found that an actuator that can be operated only by changing the amount of heat energy can be obtained by using an elastomer composition having an entropy elastic modulus of equal to or greater than a specific value and containing at least one polymer having a glass transition point of 25 °C or less, and further an elastomer composition having a crystallization degree of $1 \times 10^{-20}$% or more and 20% or less at room temperature and a cross-linking density calculated from stress at 50% elongation of $1.00 \times 10^{19}$ / $cm^3$ or more and $1.00 \times 10^{21}$ / $cm^3$ or less, thereby completing the present invention.

That is, according to the present invention, the following inventions are provided.

[1] An elastomer composition for use in an actuator that can be operated only by changing the amount of heat energy, the elastomer composition for an actuator

having an entropy elastic modulus of 3.0 kPa/K or more and
comprising at least one polymer having a glass transition temperature of 25 °C or less and a crystal nucleating agent.

[2] The elastomer composition for an actuator according to [1], wherein the crystal nucleating agent is at least one selected from the group consisting of inorganic compounds selected from carbon black, silica, talc, graphite, zinc oxide, magnesium oxide, calcium sulfate, barium sulfate, kaolin, montmorillonite, aluminum oxide, neodymium oxide and metallic salts of phenyl phosphonate; organic acid salt compounds selected from calcium benzoate, calcium oxalate, magnesium stearate, zinc salicylate, sodium benzoate, aluminum dibenzoate, potassium benzoate, lithium benzoate, sodium β/naphthalate and sodium cyclohexane carboxylate; polymer compounds selected from ionomer, high melting point PET, poly-3-methylbutene-1, polyvinylcycloalkane, polyvinyltrialkylsilane, EPR, Kevlar fiber, and high melting point nylon; benzylidene sorbitol and derivatives thereof; and 2,2'-methylenebis (4,6-di-tert-butylphenyl) sodium phosphate.

[3] The elastomer composition for an actuator according to [1] or [2], wherein the polymer is cross-linked by using a cross-linking agent.

[4] The elastomer composition for an actuator according to [3], wherein the cross-linking agent is a peroxide-based cross-linking agent or a sulfur-based cross-linking agent.

[5] The elastomer composition for an actuator according to [1] to [4], wherein the polymer is a diene rubber and/or a non-diene rubber.

[6] The elastomer composition for an actuator according to [5], wherein the diene rubber is at least one selected from the group consisting of ethylene propylene diene rubber (EPDM), ethylene octene diene rubber, ethylene butene diene rubber (EBDM), natural rubber (NR), styrene butadiene rubber (SBR), butadiene rubber (BR), isoprene rubber (IR), nitrile rubber (NBR), chloroprene rubber (CR), and butyl rubber (IIR).

[7] The elastomer composition for an actuator according to [5], wherein the non-diene rubber is at least one selected from the group consisting of ethylene rubber (polyethylene plastomer), ethylene propylene rubber (EPM), ethylene butene rubber (EBM), ethylene octene rubber (EOM), chlorosulfonated polyethylene rubber (CSM), acrylic rubber (ACM), urethane rubber (U), silicone rubber (VMQ, PVMQ, FVMQ), fluoro rubber (FKM), and polysulfide rubber (T).

[8] The elastomer composition for an actuator according to any one of [1] to [4], wherein the polymer is at least one thermoplastic elastomer selected from the group consisting of a polystyrene elastomer, a polyolefin elastomer, a polyvinyl chloride elastomer, a polyurethane elastomer, a polyester elastomer and a polyamide elastomer.

[9] An elastomer composition for use in an actuator that can be operated only by changing the amount of heat energy, wherein

the elastomer composition for an actuator has the entropy elastic modulus of 3.0 kPa/K or more, and comprises at least one polymer having a glass transition temperature of 25 °C or less, and

the elastomer composition for an actuator further has the crystallization degree of $1 \times 10^{-20}$% or more and 20% or less at room temperature and the cross-linking density of $1.00 \times 10^{19}$/cm$^3$ or more and $1.00 \times 10^{21}$/cm$^3$ or less calculated from stress at 50% elongation.

[10] An actuator member formed of the elastomer composition for an actuator according to any one of [1] to [9].

[11] The actuator member according to [10], wherein the actuator member is in a film form, a sheet form, a plate form, or a rod form.

[12] An actuator element comprising the actuator member according to [10] or [11] and a heater layer.

[13] The actuator element according to [12], wherein the heater layer is comprised of a heating element.

[14] The actuator element according to [13], wherein the heating element is comprised of a resistant heating element using Joule heat.

[15] The actuator element according to any one of [12] to [14], wherein the actuator element further comprises a thermally conductive layer between the actuator member and the heater layer.

[16] The actuator element according to [15], wherein the thermally conductive layer is comprised of a heat radiating material.

EFFECT OF THE INVENTION

According to the present invention, it is possible to provide an elastomer composition for an actuator that can be operated only by changing the amount of heat energy. According to the present invention, it is also possible to provide an actuator member which can exhibit good actuator performance (work density), and an actuator element provided with the actuator member.

[Mode for Carrying out the Invention]

[Elastomer Composition]

The elastomer composition of the present invention is to be used for an actuator that can be operated only by changing the amount of heat energy. Such an actuator can be operated stably only by changing the amount of heat energy without being affected by environmental conditions such as humidity.

The elastomer composition has an entropy elastic modulus of 3.0 kPa/K or more, preferably 3.2 kPa/K or more, more preferably 3.5 kPa/K or more, and even more preferably 4.0 kPa/K or more. The entropy elastic modulus can be appropriately adjusted by changing the types of the following polymers and crystal nucleating agents and the types and amounts of additives such as a cross-linking agent and a cross-linking aid.

The entropy elastic modulus of the elastomer composition in the present invention can be measured as follows.

Tension F when an elastomer composition is elongated is expressed by a Kelvin equation, where the first term represents energy elasticity due to internal energy ($f_U$) and the second term represents entropy elasticity due to entropy ($f_S$). That is, the entropy elasticity depends on temperature (T), and its gradient ($\partial F/\partial T$) is an important parameter as the entropy elastic modulus.

$$ F = \left(\frac{\partial U}{\partial L}\right)_{p,T} - T\left(\frac{\partial S}{\partial L}\right)_{p,T} = \left(\frac{\partial U}{\partial L}\right)_{p,T} + T\left(\frac{\partial F}{\partial T}\right)_{p,L} $$

In a stretched state, stress in the elastomer composition increases with increasing temperature, and the appearance of the entropy elasticity can be confirmed. The gradient at this time becomes the entropy elastic modulus.

According to another embodiment, the elastomer composition of the present invention has a crystallization degree at room temperature of $1 \times 10^{-20}$% or more and 20% or less, preferably $1 \times 10^{-15}$% or more and 15% or less, and more preferably $1 \times 10^{-10}$% or more and 10% or less. Furthermore, the elastomer composition of the present invention has a cross-linking density calculated from stress at 50% elongation of $1.00 \times 10^{19}$ / cm$^3$ or more and $1.00 \times 10^{21}$ / cm$^3$ or less, preferably $3.00 \times 10^{19}$ / cm$^3$ or more and $9.00 \times 10^{20}$ / cm$^3$ or less, and more preferably $5.00 \times 10^{19}$ / cm$^3$ or more and $8.00 \times 10^{20}$ / cm$^3$ or less. The elastomer composition of the present invention has good actuator properties as long as the crystallization degree at room temperature and the cross-linking density calculated from stress at 50% elongation are within the above-mentioned numerical ranges. The crystallization degree and the cross-linking density can be measured and calculated according to the methods described in the Examples.

(Polymer)

The elastomer composition comprises at least one polymer having a glass transition temperature of 25 °C or less. The polymer is preferably a diene rubber and/or a non-diene rubber.

Examples of the diene rubber include ethylene propylene diene rubber (EPDM), ethylene octene diene rubber, ethylene butene diene rubber (EBDM), natural rubber (NR), styrene butadiene rubber (SBR), butadiene rubber (BR), isoprene rubber (IR), nitrile rubber (NBR), chloroprene rubber (CR), butyl rubber (IIR) and modified diene rubbers thereof. The modified diene rubber includes diene rubbers obtained by a modification technique such as main chain modification, one end modification, both end modification, and hydrogenation. Examples of the modified functional group of the modified synthetic diene rubber include various functional groups such as an epoxy group, an amino group, an alkoxysilyl group and a hydroxyl group, and one or two or more of these functional groups may be contained in the modified synthetic diene rubber. Among these, it is preferable to use ethylene propylene diene rubber (EPDM) in order to increase the entropy elastic modulus.

Examples of the natural rubber include natural rubber latex, technical grade rubber (TSR), smoked sheet (RSS), Gutta Percha, natural rubber derived from Eucommia ulmoides, natural rubber derived from Parthenium argentatum, natural rubber derived from Russian Dandelion, and fermented rubber of plant components, and also include modified natural rubbers obtained by modifying these natural rubbers such as epoxidized natural rubber, methacrylic acid modified natural rubber, styrene modified natural rubber, sulfonic acid modified natural rubber, zinc sulfonate modified natural rubber, and the like.

Further, the ratio of cis / trans / vinyl at the double bond portion of the natural rubber and the synthetic diene rubber is not particularly limited, and any ratio can be suitably used. The number average molecular weight and molecular weight distribution of the diene rubber are not particularly limited, and the number average molecular weight is preferably 500 to 3000000 and the molecular weight distribution is preferably 1.5 to 15.

Examples of the non-diene rubber include ethylene rubber (polyethylene plastomer), ethylene propylene rubber (EPM), ethylene butene rubber (EBM), ethylene octene rubber (EOM), chlorosulfonated polyethylene rubber (CSM), acrylic rubber (ACM), urethane rubber (U), silicone rubber (VMQ, PVMQ, FVMQ), fluorine rubber (FKM), and polysulfide rubber (T).

The polymer may contain a thermoplastic elastomer in addition to the above-mentioned rubber. Examples of the thermoplastic elastomer include polystyrene-based elastomers such as a styrene-isoprene-styrene ternary block copolymer (SIS), styrene-butadiene-styrene ternary block copolymer (SBS), and their hydrogenated products (SEBS, SEPS, SEEPS), polyolefin elastomer, polyvinyl chloride elastomer, polyurethane elastomer, polyester elastomer, and polyamide elastomer.

(Crystal Nucleating Agent)

The elastomer composition contains a crystal nucleating agent. Examples of crystal nucleating agent include: inorganic compounds selected from carbon black, silica, talc, graphite, zinc oxide, magnesium oxide, calcium sulfate, barium sulfate, kaolin, montmorillonite, aluminum oxide, neodymium oxide, and metallic salts of phenyl phosphonate; organic acid salt compounds selected from calcium benzoate, calcium oxalate, magnesium stearate, zinc salicylate, sodium benzoate, aluminum dibenzoate, potassium benzoate, lithium benzoate, sodium β/naphthalate and sodium cyclohexane carboxylate; polymer compounds selected from the group consisting of ionomer, high melting point PET, poly-3-methylbutene-1, polyvinylcycloalkane, polyvinyltrialkylsilane, EPR, Kevlar fiber, and high melting point nylon; benzylidene sorbitol and derivatives thereof; and 2,2'-methylenebis (4,6-di-tert-butylphenyl) sodium phosphate. Among these, an inorganic compound is preferably used, and carbon black or silica is more preferably used.

The amount of the crystal nucleating agent added can be appropriately set according to the types of polymer and crystal nucleating agent. For example, the amount of the crystal nucleating agent added is preferably 0.1 to 300 parts by mass, more preferably 0.3 to 200 parts by mass, and even more preferably 0.5 to 100 parts by mass with respect to 100 parts by mass of the polymer. If the amount of the crystal nucleating agent added is within the above-mentioned numerical value ranges, the entropy elastic modulus of the elastomer composition can be easily adjusted to 3.0 kPa / K or more.

In the present invention, the elastomer composition has an entropy elastic modulus of 3.0 kPa / K or more and contains the above-mentioned polymer and a crystal nucleating agent, whereby the actuator performance (work density) can be improved.

(Cross-linking Agent)

The elastomer composition is preferably cross-linked by using a cross-linking agent for cross-linking the polymer. As the cross-linking agent, a peroxide-based or a sulfur-based cross-linking agent can be used. Examples of the peroxide-based cross-linking agent include peroxyketals such as 1,1-di(t-butylperoxy)cyclohexane (PHC), dialkyl peroxides such as dicumyl peroxide (DCP), 2,5-dimethyl-2,5-di(t-butylperoxy)hexane (HXA), 2,5-dimethyl-2,5-di(t-butylperoxy)hexene-3 (HXY), diacyl peroxides such as dibenzoyl peroxide (BPO), and peroxyesters such as t-butylperoxybenzoate. Examples of the sulfur-based cross-linking agent include powdered sulfur, precipitated sulfur, highly dispersed sulfur, surface treated sulfur, insoluble sulfur, dimorpholin disulfide, and alkylphenol disulfide.

The amount of the cross-linking agent added can be appropriately set according to the types of polymer and cross-linking agent, and may be an amount sufficient to cross-link the polymer so that the entropy elastic modulus of the elastomer composition is 3.0 kPa/K or more. For example, when a peroxide-based cross-linking agent is used, the amount of the peroxide-based cross-linking agent added is preferably 0.1 to 30 parts by mass and more preferably 0.2 to 20 parts by mass with respect to 100 parts by mass of the polymer. In addition, when a sulfur-based cross-linking agent is used, the amount of the sulfur-based cross-linking agent added is preferably 0.1 to 20 parts by mass and more preferably 0.2 to 10 parts by mass with respect to 100 parts by mass of the polymer.

(Other Additives)

The elastomer composition may contain other additives such as a silane coupling agent, vulcanization accelerator, vulcanization accelerator aid, cross-linking aid, anti-aging agent, antioxidant, and colorant in addition to the above-mentioned polymer and cross-linking agent to the extent that the actuator performance is not impaired.

When silica is used as the crystal nucleating agent, the entropy elastic modulus can be further increased by using a silane coupling agent. Known silane coupling agents can be used as the silane coupling agent, and examples thereof include bis[3-(triethoxysilyl)propyl]tetrasulfide, bis[3-(triethoxysilyl)propyl]disulfide, 3-octanoylthio-1-propyltriethoxysilane and a single condensation product thereof or a cocondensation product thereof with 3-mercaptopropyltriethoxysilane. Commercially available bis[3-(triethoxysilyl)propyl]tetrasulfide may be used, for example, Si-69 manufactured by Evonic. Commercially available bis[3-(triethoxysilyl)propyl]disulfide may be used, for example, Si-75 manufactured by Evonic. Commercially available 3-octanoylthio-1-propyltriethoxysilane may be used, for example, NXT silane manufactured by Momentive. Commercially available condensation product of 3-octanoylthio-1-propyltriethoxysilane may be used, for example, NXT Z45 silane manufactured by Momentive. The silane coupling agent is added in an amount of 1 to 20 %, preferably 2 to 10 % of the silane amount, and preferably 0.1 to 30 parts by mass, and more preferably 0.2 to 20 parts by mass with respect to 100 parts by mass of the polymer.

Examples of the vulcanization accelerator include thiuram-based such as tetramethylthiuram disulfide (TMTD), tetraethylthiuram disulfide (TETD) and tetramethylthiuram monosulfide (TMTM), aldehyde/ammonia-based such as hexamethylenetetramine, guanidine-based such as diphenylguanidine (DPG), thiazole-based such as 2-mercaptobenzothiazole (MBT) and dibenzothiazyl disulfide (DM), sulfenamide-based such as N-cyclohexyl-2-benzothiazylsulfideamide (CBS) and N-t-butyl-2-benzothiazylsulpheneamide (BBS), and dithiocarbamate-based such as zinc dimethyldithiocarbamate (ZnPDC). The amount of vulcanization accelerator blended is preferably 0.1 to 10 parts by mass, and more preferably 1 to 5 parts by mass, based on 100 parts by mass of the polymer.

Examples of the vulcanization accelerator aid include fatty acids such as acetyl acid, propionic acid, butanoic acid, stearic acid, acrylic acid, and maleic acid; fatty acid zinc such as zinc acetylate, zinc propionate, zinc butanoate, zinc stearate, zinc acrylate, and zinc maleate; and zinc oxide. The amount of vulcanization accelerator aid blended is preferably from 0.1 to 10 parts by mass, and more preferably from 1 to 5 parts by mass, based on 100 parts by mass of the polymer.

Examples of the cross-linking aid include triallyl isocyanurate (TAIC), triallyl cyanurate (TAC), (m-, p-, o-)phenylene bismaleimide, quinonedioxime, 1,2-polybutadiene, diallyl phthalate, ethylene glycol dimethacrylate, trimethylolpropane trimethacrylate, triethylene glycol dimethacrylate and the like. The amount of cross-linking aid blended is preferably from 0.1 to 20 parts by mass, and more preferably from 1 to 10 parts by mass, based on 100 parts by mass of the polymer.

Examples of the anti-aging agents include compounds such as aliphatic and aromatic hindered amines and hindered phenols. The amount of anti-aging agent blended is preferably from 0.1 to 10 parts by mass, and more preferably from 0.3 to 5 parts by mass, based on 100 parts by mass of the polymer.

Examples of the antioxidant include butyl hydroxytoluene (BHT), butyl hydroxyanisole (BHA) and the like. The amount of antioxidant blended is preferably from 0.1 to 10 parts by mass, more preferably from 0.3 to 5 parts by mass, based on 100 parts by mass of the polymer.

Examples of the colorant include inorganic pigments such as titanium dioxide, ultramarine blue, bengal, lithopone, lead, cadmium, iron, cobalt, aluminum, hydrochloride and sulfate, azo pigments, copper phthalocyanine pigments and the like. The amount of coloring agent blended is preferably from 0.1 to 10 parts by mass, and more preferably from 0.3 to 5 parts by mass, based on 100 parts by mass of the polymer.

[Actuator Member]

The actuator member of the present invention is obtained by molding the above-mentioned elastomer composition, and it stretches and contracts in the length direction (longitudinal direction) only by a change in the amount of heat energy. In particular, the actuator member of the present invention can contract by applying heat energy in a state of being applied with a constant load.

The shape and size of the actuator member are not particularly limited, which can be appropriately selected according to the application of the actuator element. The shape of the actuator member may be, for example, a film shape, a sheet shape, a plate shape, or a rod shape. The size of the actuator member is, for example, 1 to 1000 mm and preferably 10 to 500 mm in length, 1 to 1000 mm and preferably 5 to 500 mm in width, 1 μm to 100 mm and preferably 10 μm to 10 mm in thickness.

[Actuator Element]

The actuator element of the present invention comprises the above-mentioned actuator member and a heater layer. The actuator element may further comprise a thermally conductive layer between the actuator member and the heater layer. By applying heat energy to the actuator member by the heater layer, the actuator member can contract in the length direction (longitudinal direction).

(Heater Layer)

The heater layer is not particularly limited as long as it is capable of applying heat energy to the actuator member, but is made of, for example, a heating element, preferably a resistant heating element using Joule heat. As for the resistant heating element, any known heating element can be used without particular limitation, where examples thereof being metals such as copper and nichrome (nickel-chrome alloy), nonmetals such as carbon and silicon carbide, conductive polymers, etc., and among these, a conductive polymer film is preferably used from the viewpoint of workability and stretchability. Although the shape of the resistant heating element is not particularly limited, it can be processed so as to easily follow the elongation and contraction of the actuator member and be used. The heater layer may be laminated on the entire surface or only one portion of the actuator member.

The conductive polymer film used as the heater layer is a film containing at least a conductive polymer. Examples of the conductive polymer include at least one selected from polythiophene, polypyrrole, polyaniline, polyacetylene, polydiacetylene, polyphenylene, polyfuran, polyselenophene, polytellurophene, polyisothianaphthene, polyphenylene sulfide, polyphenylene vinylene, polythieneylenevinylene, polynaphthalene, polyanthracene, polypyrene, polyazulene, polyfluorene, polypyridine, polyquinoline, polyquinoxaline, polyethylenedioxythiophene, and derivatives thereof.

The conductive polymer film may further contain a neutral polymer or a polymer electrolyte. Examples of the neutral polymer include at least one selected from cellulose, cellophane, nylon, polyvinyl alcohol, vinylon, polyoxymethylene, polyglycerin, polyethylene glycol, polypropylene glycol, polyvinyl pyrrolidone, polyvinyl phenol, poly 2-hydroxyethyl methacrylate, and derivatives thereof. Examples of the polymer electrolyte include at least one selected from polycarboxylic acids such as polyacrylic acid and polymethacrylic acid, polysulfonic acids such as polystyrene sulfonic acid, poly2-acrylamide-2-methylpropane sulfonic acid and Nafion, polyamines such as polyallylamine, polydimethylpropyl acrylamide, and quaternary salts and derivatives thereof.

The conductive polymer film can be produced by applying to the conductive polymer at least one technique selected from casting, bar coating, spin coating, spraying, electrolytic polymerization, chemical oxidation polymerization, melt spinning, wet spinning, solid phase extrusion, and electro-spinning. Particularly preferred is a conductive polymer film of poly(3,4-ethylenedioxythiophene) doped with poly(4-styrenesulfonic acid), which provides high electrical conductivity. It is also preferred that polyglycerin is blended as a neutral polymer to the conductive polymer film.

(Thermally Conductive Layer)

The thermally conductive layer is a layer for efficiently transmitting the heat energy of the heater layer to the actuator member. It is preferable that the thermally conductive layer is a layer made of a heat radiating material. For example, a heat radiating grease may be used as the heat radiating material. A heat radiating grease is obtained by using a base oil of mineral oil or synthetic oil, adding a thickener such as soap or else thereto, and further adding a conductive material such as carbon black. Examples of the synthetic oil include a diester oil, a polyol ester oil, and a polyalkylene glycol oil. It is also possible to facilitate sliding between the actuator member and the heater layer by using the heat radiation grease.

EXAM PLES

The present invention will be specifically described below with reference to the Examples and Comparative Examples, but the present invention shall not be limited by these Examples.

<Test Example 1>

[Example 1]

The following components were each kneaded using a 100 mL kneader (Laboplast Mill manufactured by Toyo Seiki Co., Ltd.) to obtain an elastomer composition. The details of the kneading operation are as shown in (i) to (iii) below.

(i) Mixer kneading: Rubber was charged into a closed pressure kneader heated to 150 °C, and after mastication was performed at 30 rpm for 1 minute, half of the amount of a mixture measured of a crystal nucleating agent, zinc oxide, stearic acid and an anti-aging agent was charged, and the rotational speed was raised to 50 rpm, and kneading was performed for 1 minute and 30 seconds. Then, the remaining half of the amount of the mixture of a crystal nucleating agent, zinc oxide, stearic acid and an anti-aging agent was added, and kneading was continued for 1 minute and 30 seconds. After that, ram (floating weight) was raised, and the powder of the mixture of a crystal nucleating agent, zinc oxide, stearic acid and an anti-aging agent adhered to the surrounding was charged into the kneaded material by using a brush, and kneading was continued for 1 minute. After that, the ram was raised again, and the powder of the mixture of a crystal nucleating agent, zinc oxide, stearic acid and an anti-aging agent adhered to the surrounding was charged into the kneaded material by using a brush, and kneading was continued for 3 minutes, and the mixture was discharged.

(ii) Remill: The kneaded material was discharged to a closed pressure kneader heated to 120 °C and sufficiently cooled, which was further kneaded at 50 rpm for 2 minutes, and then discharged.

(iii) Roll Kneading (Addition of Cross-linking System): After the temperature was sufficiently lowered upon discharge, a cross-linking agent was added to the kneaded material by two rolls, and the kneaded material was then kneaded to obtain an elastomer composition.

After that, the obtained elastomer composition was placed in a mold (50 mm × 50 mm × 100 μm) and heated and pressurized at 150 °C for 25 minutes to obtain an actuator member having a thickness of 100 μm.

• Rubber (EPDM; manufactured by Mitsui Chemicals; Product name: 3092PM; ethylene content : 65%; diene content : 4.6%)

100 parts by mass

• Crystal nucleating agent (carbon black; Tokai Carbon Co., Ltd.; Product name: Seast KH(N339)

30 parts by mass

• Peroxide-based cross-linking agent (dicumyl peroxide (DCP); manufactured by NOF Corporation)

2 parts by mass

• Zinc oxide (manufactured by Hakusui Tech; Product name: zinc oxide type 3)

5 parts by mass

• Stearic acid (manufactured by Nippon Fine Chemical Co., Ltd.; Product name: stearic acid)

1 part by mass

• Anti-aging agent (manufactured by Ouchi Shinko Chemical Industrial; Product name: NOCCRAC 224)

0.5 parts by mass

[Example 2]

An elastomer composition and an actuator member were obtained in the same manner as in Example 1 except that 30 parts by mass of a crystal nucleating agent (silica, product name: Nipsil AQ, manufactured by Tosoh Silica Corporation) was added in place of the crystal nucleating agent (carbon black).

[Comparative Example 1]

An elastomer composition and an actuator member were obtained in the same manner as in Example 1 except that a crystal nucleating agent (carbon black) was not added.

[Example 3]

An elastomer composition and an actuator member were obtained in the same manner as in Example 1 except that a sulfur-based cross-linking agent and a cross-linking accelerator were added in the following amounts in place of the peroxide-based cross-linking agent.

• Sulfur-based cross-linking agent (oil-treated sulfur; manufactured by Hosoi Chemical Co., Ltd.; Product name: HK200-5)

0.5 parts by mass

• Cross-linking accelerator (manufactured by Ouchi Shinko Chemical Industrial, Product name: NOCCELER TOTN)

1 part by mass

• Cross-linking accelerator (manufactured by Ouchi Shinko Chemical Industrial; Product name: NOCCELER ZTC)

0.25 parts by mass

• Cross-linking accelerator (manufactured by Ouchi Shinko Chemical Industrial; product name : NOCCELER CZ)

0.75 parts by mass

[Example 4]

An elastomer composition and an actuator member were obtained in the same manner as in Example 3 except that 30 parts by mass of a crystal nucleating agent (silica, product name: Nipsil AQ, manufactured by Tosoh Silica Corporation) was added in place of the crystal nucleating agent (carbon black).

[Comparative Example 2]

An elastomer composition and an actuator member were obtained in the same manner as in Example 3 except that a crystal nucleating agent (carbon black) was not added.

[Example 5]

An elastomer composition and an actuator member were obtained in the same manner as in Example 1 except that 100 parts by mass of rubber (NR, manufactured by NZ, product name: RSS #3) was added in place of rubber (EPDM), the addition amount of the peroxide-based cross-linking agent was changed to 14 parts by mass, 10 parts by mass of a cross-linking accelerator (manufactured by Mitsubishi Chemical Corporation, product name: TAIC) was added, and 1 part by mass of an anti-aging agent (NOCCRAC 6C) was added in place of the anti-aging agent (NOCCRAC 224).

[Example 6]

An elastomer composition and an actuator member were obtained in the same manner as in Example 5 except that 30 parts by mass of a crystal nucleating agent (silica, product name: Nipsil AQ, manufactured by Tosoh Silica Corporation) was added in place of the crystal nucleating agent (carbon black), and 2.4 parts by mass of a silane coupling agent (Si-69, manufactured by Evonik) was added.

[Comparative Example 3]

An elastomer composition and an actuator member were obtained in the same manner as in Example 5 except that a crystal nucleating agent (carbon black) was not added.

[Example 7]

An elastomer composition and an actuator member were obtained in the same manner as in Example 1 except that 100 parts by mass of rubber (EPDM, manufactured by Mitsui Chemicals, trade name : 4045M, ethylene content: 45%, diene content: 7.6%) was added instead of rubber (EPDM, manufactured by Mitsui Chemicals, product name: 3092PM, ethylene content: 65%, diene content: 4.6%), and the addition amount of the peroxide-based cross-linking agent was changed to 14 parts by mass, and no crystal nucleating agent (carbon black) was added.

[Example 8]

An elastomer composition and an actuator member were obtained in the same manner as in Example 7 except that 100 parts by mass of rubber (EBDM, product name: K9720, manufactured by Mitsui Chemicals) was added in place of rubber (EPDM), and the addition amount of the peroxide-based cross-linking agent was changed to 7 parts by mass.

[Comparative Example 4]

An elastomer composition and an actuator member were obtained in the same manner as in Example 7 except that the addition amount of the peroxide-based cross-linking agent was changed to 7 parts by mass.

[Example 9]

An elastomer composition and an actuator member were obtained in the same manner as in Example 1 except that 4 parts by mass of a peroxide-based cross-linking agent (dicumyl peroxide (DCP), manufactured by NOF Corporation) and 8 parts by mass of a cross-linking accelerator (TAIC, manufactured by Mitsubishi Chemical Corporation) were added to a thermoplastic elastomer (SEBS, manufactured by Kuraray, product name: SEPTON V9461).

[Comparative Example 5]

An elastomer composition and an actuator member were obtained in the same manner as in Comparative Example 4 except that 100 parts by weight of rubber (EPM, manufactured by Japan Polyethylene Corporation, product name: KM262) was added in place of rubber (EPDM).

[Physical Property Evaluation]

Physical properties of the elastomer compositions and actuator members obtained in Examples 1 to 9 and Comparative Examples 1 to 5 were evaluated by the following method.

[Thermal Mechanical Analysis (TMA)]

Stress of the elastomer composition was measured using a thermal mechanical analysis device (model number: TMA/SS6200 manufactured by Hitachi High-Tech Science Co., Ltd.) under the following conditions. A sample used for the measurement was prepared by pressing the above-mentioned actuator member against the cutting edge of a cutter so that the length was 20 mm and the width was 1 mm, and then cutting the actuator member at once by hitting the actuator member with a hammer from above. The sample thus prepared was sandwiched between chucks so that the distance between the chucks was 10 mm and was then set in the device. The length, width and distance between the chucks of the sample were measured using a tool microscope (model number: TM-500, manufactured by Mitutoyo Corporation).

- Heating rate: 2 °C/min.
- Sampling time: 1s
- Temperature range: 20 °C to 110 °C
- Tensile distortion: 50 %

[Entropy Elastic Modulus]

The entropy elastic modulus of an elastomer composition was calculated by the following formula, and the results are shown in Table 1.

The tensile force F when the elastomer composition is elongated is expressed by a Kelvin equation, where the first term represents energy elasticity ($f_U$) due to internal energy and the second term represents the entropy elasticity ($f_S$) due to entropy. That is, the entropy elasticity depends on temperature (T), and the gradient ($\partial F/\partial T$) is an important parameter as the entropy elastic modulus.

$$F = \left(\frac{\partial U}{\partial L}\right)_{p,T} - T\left(\frac{\partial S}{\partial L}\right)_{p,T} = \left(\frac{\partial U}{\partial L}\right)_{p,T} + T\left(\frac{\partial F}{\partial T}\right)_{p,L}$$

In the elongated state, the stress of the elastomer composition increases with increasing temperature, and the appearance of the entropy elasticity can be confirmed. The gradient at this time becomes the entropy elastic modulus. This gradient was calculated using Excel and used as the entropy elastic modulus.

[Measurement of Crystallization degree]

Using differential scanning calorimetry (DSC, Hitachi High-Tech Science DSC7000X) under nitrogen, 8 to 10 mg of the sample was mounted on an aluminum pan and placed in the DSC. Thereafter, the crystallization degree was determined from the heat absorption amount $\Delta Hm$ (J/g) obtained from the peak area in the temperature raising process in step 3 under the following measurement conditions by the following equation:

$$\text{Crystallization degree (\%)} = 100 \times \Delta Hm / \Delta H$$

wherein $\Delta H$ is the amount of fused heat in a perfect crystal and in the case of an ethylene polymer, it was calculated as $\Delta H = 293$ J/g.

- Step 1: After holding at 50 °C for 1 minute, the temperature was raised up to 190 °C at a temperature escalation rate of 10 °C/min.
- Step 2: After holding at 190 °C for 5 minutes, the temperature was lowered down to 50 °C at a temperature fall rate of 10 °C /min.
- Step 3: After holding at 50 °C for 5 minutes, the temperature was raised up to 190 °C at a temperature escalation rate of 10 °C/min.

[Calculation of Cross-linking Density]

Cross-linking density was determined by the following formula using the 50% modulus of the tensile test.

$$v_e = \frac{EN_A}{3RT}$$

- $v_e$ : Cross-linking density calculated from elastic modulus ($/\ cm^3$)
- $E$ : 50% elastic modulus (MPa)
- $N_A$ : Avogadro's number (/ mol)
- $R$ : gas constant (8.314J / K / mol)
- $T$ : absolute temperature (296K)

[Manufacturing of Actuator Element]

(Preparation of PEDOT: PSS-PG (n=4) Solution)

An aqueous dispersion of poly(3,4-ethylenedioxythiophene) : poly(4-styrenesulfonate) (PEDOT : PSS) (pH = 7, neutralizer: ammonia) and polyglycerin (PG, n=4, molecular weight: 310, Sakamoto Yakuhin Kogyo Co., Ltd.) were mixed at a ratio of 4:6 and adjusted so that the solid component concentration was 2 % by mass. Thereafter, the mixture was sufficiently stirred with a magnetic stirrer.

(Preparation of Conductive Polymer Film)

The surface of a 52 × 76 mm slide glass was washed with ethanol and 12.0 g of the prepared PEDOT: PSS-PG solution was added dropwise thereto. This was heated and dried in air at 160 °C for 1 hour using a moisture meter (Moisture Balance MOC-120H, manufactured by Shimadzu Corporation). Finally, the film was peeled off from the glass substrate using a tweezer to obtain a conductive polymer film having a thickness of about 50 $\mu$m.

(Production of ETP Actuator Element)

First, the actuator member was cut into a 5 mm × 20 mm piece. Next, a polymer film having a thickness of about 50 $\mu$m produced as described above was cut into a 5 mm × 20 mm piece (the top and bottom portions are left at 5 mm each, and 10 mm in between was in the form of a mesh) using a three axis $CO_2$ laser marker (ML-Z 9550, KEYENCE) to obtain a film for a heater layer. Then, a heat conductive layer was formed by thinly applying a heat radiating material (G-775, heat conductive grease, manufactured by Shin-Etsu Chemical Co., Ltd.) on the actuator member, and a conductive polymer film produced as described above as a heater layer was laminated on the heat conductive layer to obtain an actuator element.

(Measurement of Actuator Performance)

Using the obtained ETP actuator element, the contraction rate of the actuator member was measured under the following conditions. The upper and lower ends of the actuator element were clipped with metal clips, and a constant load was suspended. As a result, the actuator member was elongated by 100 %. When it was sandwiched in a chuck, platinum foil was sandwiched in between so that it was brought into sufficient contact. Direct current voltage was applied to both ends of the actuator element using a direct current power supply (REGULATED DC POWER SUPPLY, MSAZ36-1P1M3, manufactured by Nihon Stabilizer Kogyo Co., Ltd.) to apply heat energy to the actuator member. The contraction state of the actuator member at that time was photographed with a camera, the contraction amount was measured by image analysis, and the contraction rate was calculated. The contraction rate is a ratio of the contraction amount with respect to the length (length at elongation) in a state where the actuator member is elongated by 100% by applying a constant load to the actuator member (contraction amount / length at elongation). The calculation results of the contraction rate are shown in Table 1.

[Measurement Conditions]

- Load : 88 to 140g
- Elongation due to load: 100%
- Measurement temperature: 25 to 50 °C

- Monitoring items: voltage (V), current (mA)
- Sampling time: 100 ms

The work density of the actuator member was determined by the following formula. The calculation results of the work density are shown in Table 1. The work density is preferably 180 kJ/m$^3$ or more, more preferably 200 kJ/m$^3$ or more, further preferably 220 kJ/m$^3$ or more, and further more preferably 250 kJ/m$^3$ or more.

$$W = \frac{mgh}{V_{ETP}}$$

- W: work density (J/m$^3$)
- m: load (kg)
- g: acceleration due to gravity (9.8 m/s$^2$)
- h: contraction amount (m)
- V$_{ETP}$: volume of the ETP actuator member (m$^3$)

[Table 1]

| | | Comp. Ex. 1 | Ex. 1 | Ex. 2 | Comp. Ex. 2 | Ex. 3 | Ex. 4 | Comp. Ex. 3 | Ex. 5 | Ex. 6 | Comp. Ex. 4 | Ex. 7 | Ex. 8 | Ex. 9 | Comp. Ex. 5 |
|---|---|---|---|---|---|---|---|---|---|---|---|---|---|---|---|
| Elastomer composition | Rubber (EPDM) | 100 | 100 | 100 | 100 | 100 | 100 | 0 | 0 | 0 | 0 | 0 | 0 | 0 | 0 |
| | Rubber (EPDM) | 0 | 0 | 0 | 0 | 0 | 0 | 0 | 0 | 0 | 100 | 100 | 0 | 0 | 0 |
| | Rubber (EBDM) | 0 | 0 | 0 | 0 | 0 | 0 | 0 | 0 | 0 | 0 | 0 | 100 | 0 | 0 |
| | Elastomer (SEBS) | 0 | 0 | 0 | 0 | 0 | 0 | 0 | 0 | 0 | 0 | 0 | 0 | 100 | 0 |
| | Rubber (NR) | 0 | 0 | 0 | 0 | 0 | 0 | 100 | 100 | 100 | 0 | 0 | 0 | 0 | 0 |
| | Rubber (EPM) | 0 | 0 | 0 | 0 | 0 | 0 | 0 | 0 | 0 | 0 | 0 | 0 | 0 | 100 |
| | Crystal nucleating agent (carbon black) | 0 | 30 | 0 | 0 | 30 | 0 | 0 | 30 | 0 | 0 | 0 | 0 | 0 | 0 |
| | Crystal nucleating agent (silica) | 0 | 0 | 30 | 0 | 0 | 30 | 0 | 0 | 30 | 0 | 0 | 0 | 0 | 0 |
| | Silane coupling agent | 0 | 0 | 0 | 0 | 0 | 0 | 0 | 0 | 2.4 | 0 | 0 | 0 | 0 | 0 |
| | Peroxide-based cross-linking agent | 2 | 2 | 2 | 0 | 0 | 0 | 14 | 14 | 14 | 7 | 14 | 7 | 4 | 7 |
| | Sulfur-based cross-linking agent | 0 | 0 | 0 | 0.5 | 0.5 | 0.5 | 0 | 0 | 0 | 0 | 0 | 0 | 0 | 0 |
| | Cross-linking accelerator (NOCCELER TOTN) | 0 | 0 | 0 | 1 | 1 | 1 | 0 | 0 | 0 | 0 | 0 | 0 | 0 | 0 |
| | Cross-linking accelerator (NOCCELER ZTC) | 0 | 0 | 0 | 0.25 | 0.25 | 0.25 | 0 | 0 | 0 | 0 | 0 | 0 | 0 | 0 |

(continued)

| | | Comp. Ex. 1 | Ex. 1 | Ex. 2 | Comp. Ex. 2 | Ex. 3 | Ex. 4 | Comp. Ex. 3 | Ex. 5 | Ex. 6 | Comp. Ex. 4 | Ex. 7 | Ex. 8 | Ex. 9 | Comp. Ex. 5 |
|---|---|---|---|---|---|---|---|---|---|---|---|---|---|---|---|
| | Cross-linking accelerator (NOCCELER CZ) | 0 | 0 | 0 | 0.75 | 0.75 | 0.75 | 0 | 0 | 0 | 0 | 0 | 0 | 0 | 0 |
| | Cross-linking aid (TAIC) | 0 | 0 | 0 | 0 | 0 | 0 | 10 | 10 | 10 | 0 | 0 | 0 | 8 | 0 |
| | Zinc oxide | 5 | 5 | 5 | 5 | 5 | 5 | 5 | 5 | 5 | 5 | 5 | 5 | 0 | 5 |
| | Stearic acid | 1 | 1 | 1 | 1 | 1 | 1 | 1 | 1 | 1 | 1 | 1 | 1 | 0 | 1 |
| | Anti-aging agent (NOCCRAC 224) | 0.5 | 0.5 | 0.5 | 0.5 | 0.5 | 0.5 | 0 | 0 | 0 | 0.5 | 0.5 | 0.5 | 0 | 0.5 |
| | Anti-aging agent (NOCCRAC 6C) | 0 | 0 | 0 | 0 | 0 | 0 | 1 | 1 | 1 | 0 | 0 | 0 | 0 | 0 |
| Rubber Physicalities | Cross-linking density (x $10^{20}$/cm$^3$) | 0.99 | 1.23 | 1.35 | 0.98 | 1.35 | 1.45 | 0.55 | 1.11 | 1.23 | 0.82 | 1.22 | 2.89 | 1.67 | 4.65 |
| | Crystallization degree (%) | 0.029 | 0.032 | 0.032 | 0.028 | 0.033 | 0.034 | 0 | $1.2 \times 10^{-5}$ | $1.1 \times 10^{-5}$ | $3.5 \times 10^{-5}$ | $3.5 \times 10^{-5}$ | 1.7 | 0.026 | 29 |
| | Entropy Elastic Modulus (kPa/K) | 2.5 | 5.3 | 5.1 | 1.8 | 5.4 | 5.2 | 0.6 | 4.6 | 5 | 2.8 | 4.8 | 3.1 | 3.8 | 2.9 |
| Actuator Performance | Contraction rate (%) | 2.6 | 11.2 | 10.8 | 7.9 | 13.3 | 13.2 | 2.8 | 9.8 | 9.2 | 2.7 | 12.3 | 6.7 | 8.9 | 0.1 |
| | Work density (kJ/m$^3$) | 56 | 356 | 349 | 160 | 343 | 346 | 21 | 302 | 298 | 76 | 372 | 146 | 223 | 8 |

EP 4 023 706 A1

When Examples 1 and 2 and Comparative Example 1 in which rubber (EPDM) and a peroxide-based cross-linking agent were used were compared, Examples 1 and 2 (entropy elastic modulus: 5.3 kPa/K, 5.1 kPa/K) containing a crystal nucleating agent had higher actuator performance (work density) than Comparative Example 1 (entropy elastic modulus: 2.5 kPa/K) not containing a crystal nucleating agent.

When Examples 3 and 4 and Comparative Example 2 in which rubber (EPDM) and a sulfur-based cross-linking agent were used were compared, Examples 3 and 4 (entropy elastic modulus: 5.4 kPa/K, 5.2 kPa/K) containing a crystal nucleating agent had higher actuator performance (work density) than Comparative Example 2 (entropy elastic modulus: 1.8 kPa/K) not containing a crystal nucleating agent.

When Examples 5 and 6 and Comparative Example 3 in which rubber (NR) and a peroxide-based cross-linking agent were used were compared, Examples 5 and 6 (entropy elastic modulus: 4.6 kPa/K, 5.0 kPa/K) containing a crystal nucleating agent had higher actuator performance (work density) than Comparative Example 3 (entropy elastic modulus: 0.6 kPa/K) without a crystal nucleating agent.

When Example 7 and Comparative Example 4 in which rubber (EPDM) and a peroxide-based cross-linking agent were used were compared, Example 7 (entropy elastic modulus: 4.8 kPa/K, cross-linking density: $1.22 \times 10^{20}/cm^3$) had higher actuator performance (work density) than Comparative Example 4 (entropy elastic modulus: 2.8 kPa/K, cross-linking density: $0.82 \times 10^{20}/cm^3$) due to the difference in the addition amount of the peroxide-based cross-linking agent, although neither of them contained a crystal nucleus agent.

When Examples 8 and 9 and Comparative Example 5 in which different types of rubber and elastomer were used were compared, Examples 8 and 9 (entropy elastic modulus: 3.1 kPa/K, 3.8 kPa/K) had higher actuator performance (work density) than Comparative Example 5 (entropy elastic modulus: 2.9 kPa/K, crystallization degree: 29%), although none of them contained a crystal nucleating agent. Further, Comparative Example 5 had a too high crystallization degree of over 20% and thus the contraction rate was low, and the actuator performance (work density) was low.

Therefore, it has been found that the actuator performance (work density) can be improved by using the elastomer composition for an actuator according to the present invention.

## Claims

1. An elastomer composition for use in an actuator that can be operated only by changing the amount of heat energy, wherein
   the elastomer composition for an actuator has an entropy elastic modulus of 3.0 kPa/K or more and comprises at least one polymer having a glass transition temperature of 25 °C or less and a crystal nucleating agent.

2. The elastomer composition for an actuator according to claim 1, wherein
   the crystal nucleating agent is at least one selected from the group consisting of inorganic compounds selected from carbon black, silica, talc, graphite, zinc oxide, magnesium oxide, calcium sulfate, barium sulfate, kaolin, montmorillonite, aluminum oxide, neodymium oxide and metallic salts of phenyl phosphonate; organic acid salt compounds selected from calcium benzoate, calcium oxalate, magnesium stearate, zinc salicylate, sodium benzoate, aluminum dibenzoate, potassium benzoate, lithium benzoate, sodium β/naphthalate and sodium cyclohexane carboxylate; polymer compounds selected from ionomer, high melting point PET, poly-3-methylbutene-1, polyvinylcycloalkane, polyvinyltrialkylsilane, EPR, Kevlar fiber, and high melting point nylon; benzylidene sorbitol and derivatives thereof; and 2,2'-methylenebis (4,6-di-tert-butylphenyl) sodium phosphate.

3. The elastomer composition for an actuator according to claim 1 or 2, wherein
   the polymer is cross-linked by using a cross-linking agent.

4. The elastomer composition for an actuator according to claim 3, wherein
   the cross-linking agent is a peroxide-based cross-linking agent or a sulfur-based cross-linking agent.

5. The elastomer composition for an actuator according to any one of claims 1 to 4, wherein
   the polymer is a diene rubber and/or a non-diene rubber.

6. The elastomer composition for an actuator according to claim 5, wherein
   the diene rubber is at least one selected from the group consisting of ethylene propylene diene rubber (EPDM), ethylene octene diene rubber, ethylene butene diene rubber (EBDM), natural rubber (NR), styrene butadiene rubber (SBR), butadiene rubber (BR), isoprene rubber (IR), nitrile rubber (NBR), chloroprene rubber (CR), butyl rubber (IIR), and modified diene rubbers thereof.

**7.** The elastomer composition for an actuator according to claim 5, wherein
the non-diene rubber is at least one selected from the group consisting of ethylene rubber (polyethylene plastomer), ethylene propylene rubber (EPM), ethylene butene rubber (EBM), ethylene octene rubber (EOM), chlorosulfonated polyethylene rubber (CSM), acrylic rubber (ACM), urethane rubber (U), silicone rubber (VMQ, PVMQ, FVMQ), fluoro rubber (FKM), and polysulfide rubber (T).

**8.** The elastomer composition for an actuator according to any one of claims 1 to 4, wherein
the polymer is at least one thermoplastic elastomer selected from the group consisting of a polystyrene elastomer, a polyolefin elastomer, a polyvinyl chloride elastomer, a polyurethane elastomer, a polyester elastomer and a polyamide elastomer.

**9.** An elastomer composition for use in an actuator that can be operated only by changing the amount of heat energy, wherein

the elastomer composition for an actuator has the entropy elastic modulus of 3.0 kPa/K or more, and comprises at least one polymer having a glass transition temperature of 25 °C or less, and
the elastomer composition for an actuator further has the crystallization degree of $1 \times 10^{-20}$% or more and 20% or less at room temperature and the cross-linking density of $1.00 \times 10^{19}$/cm$^3$ or more and $1.00 \times 10^{21}$/cm$^3$ or less calculated from stress at 50% elongation.

**10.** An actuator member formed of the elastomer composition for an actuator according to any one of claims 1 to 9.

**11.** The actuator member according to claim 10, wherein
the actuator member is in a film form, a sheet form, a plate form, or a rod form.

**12.** An actuator element comprising the actuator member according to claim 10 or 11 and a heater layer.

**13.** The actuator element according to claim 12, wherein
the heater layer is comprised of a heating element.

**14.** The actuator element according to claim 13, wherein
the heating element is comprised of a resistant heating element using Joule heat.

**15.** The actuator element according to any one of claims 12 to 14, wherein
the actuator element further comprises a thermally conductive layer between the actuator member and the heater layer.

**16.** The actuator element according to claim 15, wherein
the thermally conductive layer is comprised of a heat radiating material.

## INTERNATIONAL SEARCH REPORT

| International application No. |
| --- |
| PCT/JP2020/032123 |

A.   CLASSIFICATION OF SUBJECT MATTER
C08K  5/098(2006.01)i;   C08K   5/14(2006.01)i;   C08L   9/00(2006.01)i;   C08L
21/00(2006.01)i;   C08L   101/00(2006.01)i;   F03G   7/06(2006.01)i;   C08K
3/01(2018.01)i; C08K 3/06(2006.01)i
FI:      C08L21/00; C08K3/01; C08K5/098; C08L101/00; C08K3/06; C08K5/14;
         C08L9/00; F03G7/06 G

According to International Patent Classification (IPC) or to both national classification and IPC

B.   FIELDS SEARCHED

Minimum documentation searched (classification system followed by classification symbols)
C08K5/098; C08K5/14; C08L9/00; C08L21/00; C08L101/00; F03G7/06; C08K3/01;
C08K3/06

Documentation searched other than minimum documentation to the extent that such documents are included in the fields searched
Published examined utility model applications of Japan          1922-1996
Published unexamined utility model applications of Japan        1971-2020
Registered utility model specifications of Japan                1996-2020
Published registered utility model applications of Japan        1994-2020

Electronic data base consulted during the international search (name of data base and, where practicable, search terms used)
Scopus; JSTPlus (JDreamIII); JST7580 (JD reamIII)

C.   DOCUMENTS CONSIDERED TO BE RELEVANT

| Category* | Citation of document, with indication, where appropriate, of the relevant passages | Relevant to claim No. |
| --- | --- | --- |
| A | BOTHE, M. et al., "Two-way shape changes of a shape-memory poly(ester urethane)", MACROMOLECULAR CHEMISTRY AND PHYSICS, 2012, V213, N22, P2378-2385, entire text | 1-16 |
| A | JP 2011-201993 A (TOKAI RUBBER INDUSTRIES, LTD.) 13 October 2011 (2011-10-13) | 1-16 |
| A | JP 2-55877 A (DAIKIN INDUSTRIES, LTD.) 26 February 1990 (1990-02-26) | 1-16 |
| A | WO 2017/104274 A1 (TOYO TIRE AND RUBBER CO., LTD.) 22 June 2017 (2017-06-22) | 1-16 |

☐  Further documents are listed in the continuation of Box C.          ☒  See patent family annex.

\*      Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
| --- | --- |
| 27 October 2020 (27.10.2020) | 10 November 2020 (10.11.2020) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

Information on patent family members

International application No.

PCT/JP2020/032123

| Patent Documents referred in the Report | Publication Date | Patent Family | Publication Date |
|---|---|---|---|
| JP 2011-201993 A | 13 Oct. 2011 | (Family: none) | |
| JP 2-55877 A | 26 Feb. 1990 | (Family: none) | |
| WO 2017/104274 A1 | 22 Jun. 2017 | US 2018/0356167 A1<br>EP 3392298 A1<br>AU 2016370902 A<br>KR 10-2018-0048822 A<br>CN 108137847 A | |

Form PCT/ISA/210 (patent family annex) (January 2015)

**EP 4 023 706 A1**